# EUROPEAN PATENT APPLICATION

(11) **EP 2 154 222 A1**
(43) Date of publication of application: **17.02.2010**
(21) Application number: 07743723.4
(22) Date of filing: 14.05.2007
(51) Int. Cl.: C09K 3/00, A62D 3/30, B09B 3/00, C01B 33/26, D06M 11/79, A62D 101/41, A62D 101/47, D06M 101/00

(54) **MODIFIER FOR SILICATE-CONTAINING FIBROUS SUBSTANCE, METHOD OF MODIFYING THE SAME AND MODIFIED MATERIAL**

(71) Applicant: Morizane, Toshinori, 26-12, Hazawa 2-chome Nerima-ku Tokyo 176-0003 (JP)
(72) Inventor: Morizane, Toshinori, 26-12, Hazawa 2-chome Nerima-ku Tokyo 176-0003 (JP)
(74) Representative: Denison, Christopher Marcus
(86) International application number: PCT/JP2007/060288
(87) International publication number: WO 2008/139635

(57) **Abstract**

This invention is intended to modify, detoxify, or effectively use, as cordierite, a silicate-containing fibrous material. A silicate-containing fibrous material is modified into a low-expansion and heat-resistant cordierite compound by treating a silicate-containing fibrous material with a modifier for a silicate-containing fibrous material comprising an aqueous alkaline solution mainly composed of alkali silicate comprising an ammonium ion, a halide ion, a boron ion, and an aluminum ion.

## Description

### Technical Field

The present invention relates to a modifier for a silicate-containing fibrous material, such as asbestos, basalt fibers, and mullite fibers, a method for modifying such material, and a material that is modified by such method.

### Background Art

In the past, asbestos was extensively used as a material sprayed on buildings, an industrial component, and the like because of its advantages in terms of, for example, heat resistance, thermal insulation properties, and electric insulation properties. However, it is well-known that asbestos is a toxic substance in the form of dust and a carcinogen, and processing thereof has been examined.

Waste asbestos-containing substances are treated via, for example, solidification with the use of concrete or special resin or via high-temperature vitrification. In the case of solidification, asbestos is sealed in the aforementioned state. Thus, asbestos is dispersed as dust because of weathering, which necessitates management over time. In the case of high-temperature vitrification, waste asbestos-containing substances are melted and mixed to decompose the fibrous structure of asbestos for vitrification. This necessitates treatment at considerably high temperatures (i.e., 1,600°C or higher) and incurs vast equipment cost.

JP Patent Publication (kokai) No. H06-340470 A (1994) discloses a ceramic sintered body comprising an asbestos-containing material blended with SiO₂, CaO, and MgO, a blend of one or more kinds of flux selected from among Na₂O, Al₂O₃, K₂O, B₂O₃, LiO₂, F, and BaO or the aforementioned compounds with a plasticizer such as clay to prepare a body having a chemical composition satisfying the 0.8-2.5 molar ratio of CaO to MgO and the >2.0 molar ratio of SiO₂ to (CaO+MgO). Molding and heating are used to form diopside-based crystals in the resulting sintered body.

The technique of JP Patent Publication (kokai) No. H06-340470 A (1994), however, merely enables treatment at lower temperatures than high-temperature vitrification; i.e., at about 1100°C to 1350°C, by forming diopside-based crystals in the sintered body. Accordingly, such technique is completely different from the present invention, which is capable of converting asbestos or the like into a useful substance; i.e., cordierite.

The present inventor disclosed a modifier for porous materials comprising an aqueous alkaline solution composed mainly of alkali silicate containing ammonium ions and halide ions (JP Patent Publication (kokoku) No. H07-10750 B (1995)). Such modifier, however, cannot modify a silicate-containing fibrous material such as asbestos.

### Disclosure of the invention

The present invention is intended to modify, detoxify, or effectively use, as cordierite, a silicate-containing fibrous material.

The present invention is summarized as follows.
(1) A modifier for a silicate-containing fibrous material, which comprises an aqueous alkaline solution mainly composed of alkali silicate comprising an ammonium ion, a halide ion, a boron ion, and an aluminum ion.
(2) The modifier for a silicate-containing fibrous material according to (1), wherein alkali silicate is represented by the following general formula: M₂O·nSiO₂ wherein M represents an alkali metal and n is a number between 1 and 5, which may not be an integer.
(3) The modifier for a silicate-containing fibrous material according to (1) or (2), wherein the alkali silicate concentration is from 10% to 50% by weight.
(4) The modifier for a silicate-containing fibrous material according to any of (1) to (3), which comprises methanol.
(5) The modifier for a silicate-containing fibrous material according to any of (1) to (4), wherein ammonium acid fluoride is added as a halide ion source.
(6) The modifier for a silicate-containing fibrous material according to any of (1) to (5), which comprises perchloric acid or a salt thereof.
(7) The modifier for a silicate-containing fibrous material according to any of (1) to (6), wherein the silicate-containing fibrous material is selected from the group consisting of serpentine asbestos, amphibole asbestos, basalt fibers, mullite fibers, and a mixture of two or more thereof.
(8) A method for modifying a silicate-containing fibrous material comprising bringing a silicate-containing fibrous material into contact with the modifier for a silicate-containing fibrous material according to any of (1) to (7).
(9) The method for modifying a silicate-containing fibrous material according to (8), wherein the silicate-containing fibrous material is modified into cordierite.
(10) A material obtained by the method for modifying a silicate-containing fibrous material according to (8) or (9).

In this description, the term "silicate-containing fibrous material" refers to a fibrous material containing silicate. Examples thereof include natural mineral fibers such as asbestos and artificial mineral fibers such as basalt fibers and mullite fibers. Examples of asbestos include serpentine asbestos such as chrysotile (Mg₃Si₂O₅(OH)₄) and amphibole asbestos such as crocidolite (Na₂(Fe²⁺,Mg)₃(Fe³⁺)₂Si₈O₂₂(OH,F)₂), amosite ((Fe,Mg)₇Si₈O₂₂(OH)₂), anthophylite ((Mg,Fe)₇Si₈O₂₂(OH)₂), tremolite (Ca₂Mg₅Si₈O₂₂(OH)₂), and actinolite (Ca₂(Mg,Fe)₅Si₈O₂₂(OH)₂).

The present invention is a technique for detoxifying and recycling silicate-containing fibrous materials such as asbestos. This technique involves the utilization of ions contained in a crystalline composition or structure and performance of ion exchange with the addition of aluminum ions (in accordance with the ionization tendency), to thereby convert silicate-containing fibrous materials such as asbestos into cordierite crystals, detoxify the material, and provide a material having heat resistance and low-expansion properties.

The modifier of the present invention comprises an aqueous alkaline solution mainly composed of alkali silicate. The term "mainly composed of alkali silicate" refers to the fact that there is a greater amount of alkali silicate than that of any other alkaline components in the aqueous alkaline solution. It is preferable that the alkaline components in the aqueous alkaline solution substantially consist of alkali silicate.

Alkaline silicate represented by the following general formula: M₂O·nSiO₂ (wherein M represents an alkali metal and n is between 1 and 5) is preferable, and sodium, potassium, or lithium is preferable as the alkali metal.

The alkali silicate concentration in an aqueous alkaline solution is preferably 10% to 50% by weight. At concentrations of less than 10% by weight, precipitation of a silicate compound generated by the reaction would be insufficient. At concentrations of greater than 50% by weight, a halide ion, in particular, a fluoride ion, reacts with a Si ion in the solution, it is converted into SiF₆, and it is gasified so as to decrease the amount of Si and to lower the catalytic functions of the halide ion. In such a case, the masking effects of triethanolamine (TEA) may be utilized. Alternatively, the B³⁺ ion may be added to form an intermediate reaction product, BF₃, to complete the formation of a stable oxide salt. Specifically, such substance reacts with an OH group of the silicate-containing fibrous material such as asbestos, it is converted into HF, it is gasified, and it then disappears.

The aqueous alkaline solution used in the present invention comprises ammonium ions. Ammonium ion functions as an activator for an ion exchange reaction in accordance with the ionization tendency of calcium ions and magnesium ions in the silicate-containing fibrous material and alkali metal in alkali silicate. As ammonium ion sources, inorganic ammonium salts, such as ammonium chloride, ammonium sulfate, ammonium sulfide, ammonium phosphate, ammonium fluoride, and ammonium acid fluoride (NH₄F·HF), are preferable. Ammonium chloride, ammonium fluoride, and ammonium acid fluoride also serve as halide ion sources.

The ammonium ion concentration in the aqueous alkaline solution used in the present invention is preferably 0.01 to 50 mol/kg, and more preferably 0.01 to 1.0 mol/kg. If the ammonium ion concentration is excessively low, the function thereof as an activator for the ion exchange reaction becomes low. If the ammonium ion concentration is excessively high, the pH level becomes 10.5 or lower (the buffer theory).

The aqueous alkaline solution used in the present invention comprises halide and boron ions as catalysts for the ion exchange reaction.

As halide ions, chloride or fluoride ions are preferable, with fluoride ions being more preferable. As halide ion sources, metals such as Na, K, Ca, Mg, and Al or chloride or fluoride of ammonium (e.g., sodium fluoride and ammonium fluoride), and ammonium acid fluoride are preferable, and ammonium acid fluoride is more preferable in terms of solubility. In general, ammonium acid fluoride is added in an amount of 1 to 10% by weight in the form of a diluent comprising approximately 1% by weight of ammonium acid fluoride. Chloride or fluoride of Al can also serve as an aluminum source.

The amount of the halide ion source incorporated in the aqueous alkaline solution used in the present invention is preferably 0.01 % to 50% by weight, and further preferably 0.01% to 1.0% by weight. The halide ion concentration is preferably 0.01 to 50 mol/kg, and more preferably 0.01 to 1.0 mol/kg. If the halide ion concentration is excessively low, the ion's effects as a catalyst are insufficient, and the object of the present invention cannot be completely attained. Excessively high halide ion concentration is not particularly problematic, although an agent would be wasted.

As boron ion sources, boric acid or a salt thereof, sodium borate, an aqueous solution thereof, and boron alcoholate (e.g., boron methyl alcoholate (an H₃BO₃ methanol solution)) are preferable, and boron alcoholate (e.g., boron methyl alcoholate (an H₃BO₃ methanol solution)) is more preferable.

The boron ion concentration in an aqueous alkaline solution used in the present invention is preferably 0.1 to 100 mol/kg, and more preferably 0.1 to 2.0 mol/kg. If the boron ion concentration is excessively low, halide ions such as fluoride ions may remain in the product. In contrast, excessively high concentration is not particularly problematic, although an agent would be wasted.

As is apparent from the above-described reaction mechanism, the boron ion source is preferably added prior to the addition of halide ion sources when preparing the modifier of the present invention.

An aqueous alkaline solution used in the present invention comprises aluminum ions. Silicate-containing fibrous materials, such as asbestos, do not substantially comprise aluminum ions. Thus, aluminum ions are necessary to prepare cordierite from such silicate-containing fibrous materials.

Any water-soluble aluminum salts can be used as aluminum ion sources without particular limitation. Examples thereof include aluminum chloride and polyaluminum chloride.

The aluminum ion concentration in an aqueous alkaline solution used in the present invention is preferably 0.01 mol/kg or higher, and more preferably 0.01 to 50 mol/kg.

To an aqueous alkaline solution used in the present invention, a minor amount of alcohol such as methanol, ethanol, n-propyl alcohol, or isopropyl alcohol is added, in order to accelerate permeation and diffusion of the aqueous solution in the silicate-containing fibrous materials. Preferably, alcohol is added in an amount equivalent to or greater than the amount of boron ions.

When alcohol, such as methanol, is added, a boron ion contained in the aqueous alkaline solution reacts with alcohol. When methanol is used, for example, B(OCH₃)₃ is generated, and it is gasified and extinguished at 60°C to 70°C. Thus, use of alcohol is effective when removal of boron ions from the aqueous alkaline solution is required.

The aqueous alkaline solution used in the present invention is alkaline. When halide ions such as fluoride ions are added, accordingly, in order to prevent precipitation of compounds of calcium or the like, it can be to mask by addition of a solution of triethanolamine (TEA) in alcohol (TEA:alcohol = 1:2 to 2:1) (a solution comprising a TEA:alcohol ratio of about 1:1 is generally used). The amount of TEA to be added to an alcohol solution is not particularly limited. In general, TEA is added in an amount of about 0.1% to 10% by weight relative to the total amount of the alkali silicate solution.

To the aqueous alkaline solution used in the present invention, perchloric acid or perchloric acid salts (e.g., NaClO₄ or KClO₄) are preferably added, in order to accelerate ionization of components in the silicate-containing fibrous materials. The concentration of perchloric acid or perchloric acid salts in the aqueous alkaline solution is preferably 3% by weight or higher and more preferably 3% to 10% by weight. It should be noted that perchloric acid or perchloric acid salts are unable to serve as halide ion sources.

When survival of OH groups following impregnation and crystallization of cordierite is somewhat incomplete because of the type of the silicate-containing fibrous material, 1.0% by weight or more graphite (carbon) is preferably added to the treatment solution. In such a case, phosphate is preferably added as a deflocculant in order to disperse graphite (carbon) in the solution. The amount of the deflocculant (phosphate) added may be about 0.1% by weight relative to the entire amount of the solution.

According to the modification method of the present invention, a silicate-containing fibrous material may be brought into contact with the modifier comprising the aqueous alkaline solution to modify, detoxify, or effectively use, as cordierite, the silicate-containing fibrous material.

Silicate-containing fibrous materials are not particularly limited, and examples thereof include asbestos waste, basalt fibers waste, and mullite fiber waste.

A silicate-containing fibrous material may be brought into contact with the aqueous alkaline solution by any method. For example, a silicate-containing fibrous material may be soaked in the aqueous alkaline solution, or the aqueous alkaline solution may be sprayed on the surface of the silicate-containing fibrous material or an area in which the silicate-containing fibrous material is present.

The amount of the aqueous alkaline solution used is not particularly limited. In general, such amount is about 3.0 m²/kg (≒ 330 g/m²) when asbestos is of standard thickness.

The treatment temperature is generally 0°C or higher, and preferably room temperature or higher. In general, the reaction is completed via processing for 15 to 30 minutes. A silicate-containing fibrous material is modified into hydrous cordierite without heating treatment. In order to prepare anhydrous cordierite with a high utility value, however, heating treatment is preferably carried out at 500°C to 750°C.

The reaction to be employed for the purpose of the present invention can be explained by the tendency of a metal to become cationic when it comes into contact with water or a solution, i.e., due to the normal electrode potential of a metal.

That is to say, it is an application of a phenomenon such that, when, for example, a metal M¹ (e.g., Na, K, Li, etc.) comes into contact with an electrolytic solution containing a different kind of metal ion M² (e.g., Ca, Mg, Al, etc.), the following ion-substitution reaction proceeds rightward as the ionization tendency of M¹ is greater than that of M².

M¹ (undissociated) + M² (ion) → M¹ (ion) + M² (undissociated) (1)

In general, the aqueous solution of alkali silicate exhibits strong alkalinity resulting from its hydrolysis in accordance with, for example, the following formula (2):

M¹₂SiO₃ + H₂O → M¹₂SiO₅ + M¹OH (2)

(aqueous solution of alkali silicate)
(in formula (2), M¹₂SiO₃ is M¹₂ O·SiO₂; and M¹₂Si₂O₅ is M¹₂O·2SiO₂ (hereinafter represented as such)). M² etc. in the silicate-containing fibrous material (e.g., asbestos) reacts with alkali silicate to produce silicate, i.e., Mg₂Al₄·SiO₁₈ (2MgO· 2Al₂O₃·5SiO₂), and colloidal silicic acid as shown in, for example, formula (3) below. A hydroxylated structure may occasionally be exhibited, and heat supplementation is carried out at 650°C to 750°C to precipitate more stable cordierite after the reaction.

M¹₂Si₂O₅ + M² (e.g., Ca²⁺, Mg²⁺, or Al³⁺) + H₂O → M²SiO₃ + SiO₂ + Si(OH)₄ +M¹OH (3)

In the present invention, catalytic action of halide ions X⁻(F⁻, Cl⁻) and boron ions B³⁺ are considered as follows.

Specifically, a halide ion acts on M² in the presence of a boron ion to generate a complex salt M²X⁻ₘ₊₁ (where m represents a valence of M²) and forms BF₃ in order to prevent generation of a stable complex salt. Thus, a coupling element is attenuated and generation of the target crystalline structure is facilitated.

A boron ion (B³⁺) becomes BF₃, an intermediate is formed, and M²Si₂O₅ can be generated, without forming stable complex salts, such as SiF₆ and M²F₂.

Specifically, silicate-containing fibrous materials, such as asbestos, contain Mg ions and Ca ions, and hydrolysis represented by formula (4) and dehydration represented by formula (5) are accelerated with the addition of an aluminum ion reaction agent.

M²X⁻ₘ₊₁ + H₂O → M²(OH)ₘ + X⁻ (4)

M²(OH)ₘ + M¹₂Si₂O₅ → M²Si₂O₅ + M¹OH (5)

In these formulae, M² is Mg·Al, and cordierite (Mg₂Al₄Si₅O₁₈=2MgO·2Al₂O₃ ·5SiO₂) is generated.

### Brief Description of the Drawings

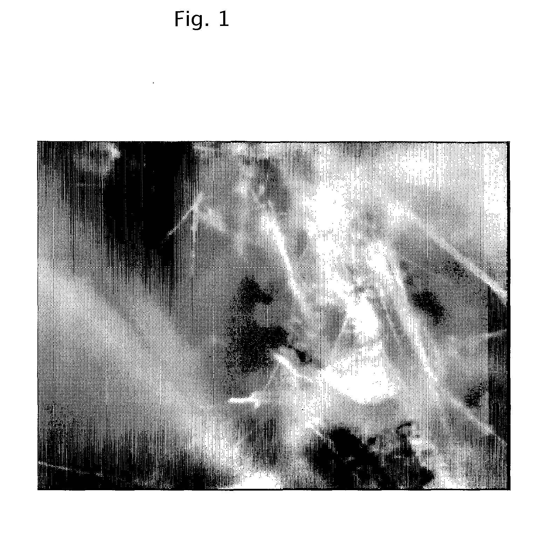

Fig. 1 is a microscopic photograph showing the asbestos structure.
Fig. 2 is an x-ray analytical diagram from the treatment of asbestos with the modifier of the present invention (the upper diagram) and an x-ray analytical diagram of a cordierite standard (the lower diagram).
Fig. 3 is a microscopic photograph showing asbestos converted into cordierite.

### Best Modes for Carrying out the Invention

Hereafter, the present invention is described with reference to the examples.

The values obtained via chemical analysis of asbestos used in the following examples are shown in Table 1.

**Table 1**

| | |
|---|---|
| SiO₂ | 49.00% |
| CaO | 28.90% |
| Na₂O | 12.40% |
| MgO | 5.63% |
| Fe₂O₃ | 0.88% |
| TiO₂ | 0.80% |
| SO₃ | 0.53% |
| MnO | 0.38% |
| K₂O | 0.35% |
| Fe | 0.30% |
| P₂O₅ | 0.20% |
| Cl | 0.07% |
| Total | 99.44% |

| | |
|---|---|
| (Unit: % by weight) | |

### [Example 1]

An aqueous alkaline solution having the following composition was prepared.

| | Parts by weight |
|---|---|
| (A) Aqueous solution of Na₂O·3SiO₂: (Na₂O·3SiO₂:water = 1:1.5) | 60 |
| (B) Aqueous solution of 10% aluminum chloride: | 10 |
| Aqueous solution of 10% magnesium chloride: | 10 |
| Aqueous solution of 10% calcium chloride: | 10 |
| Aqueous solution of 10% graphite: | 10 |
| (containing 1/1,000 of ammonium phosphate (a deflocculant) relative to graphite by weight) | |
| (C) With respect to 100 parts by weight of (A) + (B) | |
| Solution of 10% H₃BO₃ methanol: | 0.2 |
| Aqueous solution of 1% ammonium acid fluoride: | 3.8 |

The mixed solution (B) was mixed with the aqueous solution of Na₂O·3SiO₂ (A) in accordance with the above-described formulation, and the solutions (C) were mixed therewith, in the order of the solution of 10% H₃BO₃ methanol and the aqueous solution of 1% ammonium acid fluoride to prepare an aqueous alkaline solution.

The thus-obtained aqueous alkaline solution comprises about 1.0 mol/kg of ammonium ions, about 1.0 mol/kg of halide ions, about 2.0 mol/kg of boron ions, about 1.0 mol/kg of aluminum ions, and about 0.2% by weight of methanol.

### [Example 2]

An aqueous alkaline solution having the following composition was prepared.

| | Parts by weight |
|---|---|
| (A) Aqueous solution of Na₂O·3SiO₂: (Na₂O·3SiO₂:water = 1:1.5) | 60 |
| (B) Mixed solution of 10% ammonium salts: (ammonium sulfate and ammonium phosphate) | 10 |
| Aqueous solution of 10% aluminum chloride: | 10 |
| Aqueous solution of 10% magnesium chloride: | 10 |
| Aqueous solution of 10% calcium chloride: | 10 |
| Aqueous solution of 10% graphite: | 10 |
| (containing 1/1,000 of ammonium phosphate (a deflocculant) relative to graphite by weight) | |
| (C) With respect to 100 parts by weight of (A) + (B) | |
| Solution of 10% H₃BO₃ methanol: | 0.2 |
| Aqueous solution of 1% ammonium acid fluoride: | 3.8 |

The mixed solution (B) was mixed with the aqueous solution of Na₂O·3SiO₂ (A) in accordance with the above-described formulation, and the solutions (C) were mixed therewith in the order of the solution of 10% H₃BO₃ methanol and the aqueous solution of 1% ammonium acid fluoride to prepare an aqueous alkaline solution.

The thus-obtained aqueous alkaline solution comprises about 1.0 mol/kg of ammonium ions, about 1.0 mol/kg of halide ions, about 2.0 mol/kg of boron ions, about 1.0 mol/kg of aluminum ions, and about 0.2% by weight of methanol.

When the reaction of generating cordierite from a silicate-containing fibrous material such as asbestos is delayed (i.e., when the reaction proceeds slowly), it is effective to add an aqueous solution of 10% perchloric acid salts (e.g., HClO₄, NaClO₄, or KClO₄) to the aqueous alkaline solution of Example 1 or 2 to accelerate ionization.

### [Example 3]

The aqueous alkaline solution (i.e., the modifier) of Example 1 or 2 was directly sprayed at 3.0 m²/kg (≒ 330 g/m²) on asbestos, or asbestos was soaked in such aqueous solution. Treatment was carried out at room temperature for 15 to 30 minutes in order to thoroughly penetrate the asbestos. As a result, asbestos was modified into hydrous cordierite.

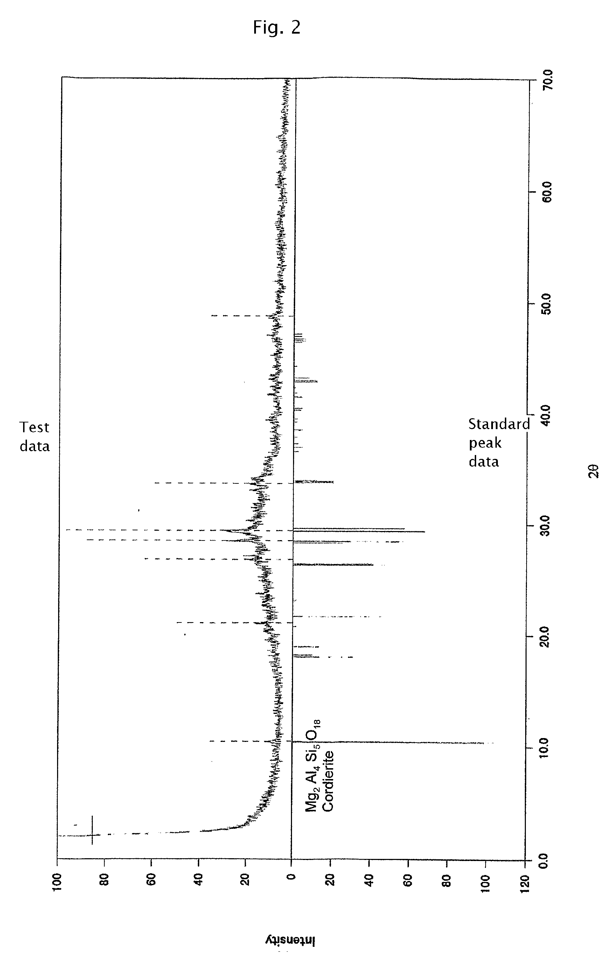

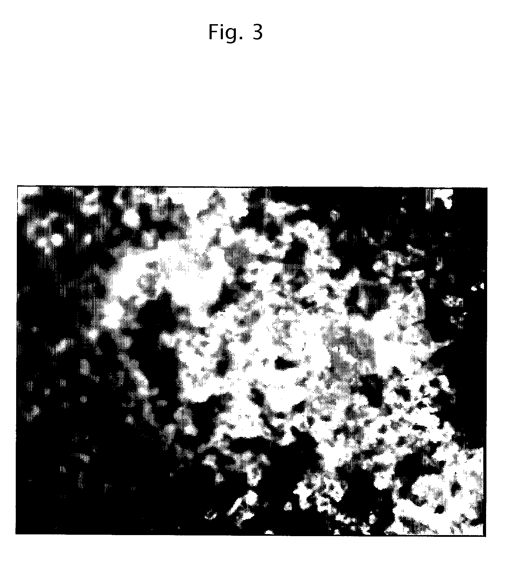

Fig. 2 (the upper diagram) shows an x-ray analytical diagram of the product obtained by directly spraying the aqueous alkaline solution (i.e., the modifier) of Example 1. The x-ray analytical diagram of the product shows a standard peak indicated in the x-ray analytical diagram of the cordierite standard (Fig. 2: the lower diagram). Thus, treatment of asbestos with the modifier of the present invention was found to result in conversion of asbestos into cordierite. Fig. 3 shows a microscopic photograph of the obtained cordierite.

### Industrial Applicability

The modifier of the present invention may be directly sprayed on an area at which a silicate-containing fibrous material such as asbestos is present, so that the silicate-containing fibrous material can be converted into a crystal having a stabilized structure that would not become scattered. According to need, heat supplementation may be carried out at 500°C to 750°C to convert a silicate-containing fibrous material into stable cordierite, and the resulting cordierite can be reused as a more stabilized starting material.

Because of its heat-resistant and low-expansion properties, cordierite can be reused as a heat-resistant and low-expansion porcelain or building material, and such material can be disposed of directly. Cordierite materials can be used as recycled materials in various industrial fields, and such materials can serve as active resources for important starting materials that would not bring about environmental contamination.

## Claims

1. A modifier for a silicate-containing fibrous material, which comprises an aqueous alkaline solution mainly composed of alkali silicate comprising an ammonium ion, a halide ion, a boron ion, and an aluminum ion.

2. The modifier for a silicate-containing fibrous material according to claim 1, wherein the alkali silicate is represented by the following general formula: M₂O·nSiO₂ wherein M represents an alkali metal and n is a number between 1 and 5, which may not be an integer.

3. The modifier for a silicate-containing fibrous material according to claim 1 or 2, wherein the alkali silicate concentration is from 10% to 50% by weight.

4. The modifier for a silicate-containing fibrous material according to any one of claims 1 to 3, which comprises methanol.

5. The modifier for a silicate-containing fibrous material according to any one of claims 1 to 4, wherein ammonium acid fluoride is added as a halide ion source.

6. The modifier for a silicate-containing fibrous material according to any one of claims 1 to 5, which comprises perchloric acid or a salt thereof.

7. The modifier for a silicate-containing fibrous material according to any one of claims 1 to 6, wherein the silicate-containing fibrous material is selected from the group consisting of serpentine asbestos, amphibole asbestos, basalt fibers, mullite fiber, and a mixture of two or more thereof.

8. A method for modifying a silicate-containing fibrous material comprising bringing a silicate-containing fibrous material into contact with the modifier for a silicate-containing fibrous material according to any one of claims 1 to 7.

9. The method for modifying a silicate-containing fibrous material according to claim 8, wherein the silicate-containing fibrous material is modified into cordierite.

10. A material obtained by the method for modifying a silicate-containing fibrous material according to claim 8 or 9.
